# EUROPÄISCHE PATENTSCHRIFT

(11) **EP 2 572 151 B1**
(45) Veröffentlichungstag und Bekanntmachung des Hinweises auf die Patenterteilung: **09.04.2014**
(21) Anmeldenummer: 11720505.4
(22) Anmeldetag: 19.05.2011
(51) Int. Cl.: F27B 3/24, F27D 1/12, F27D 9/00, C21B 7/10

(54) **KÜHLUNG FÜR EIN METALLURGISCHES GEFÄSS**
COOLING FOR A METALLURGICAL VESSEL
REFROIDISSEMENT POUR UN RÉCIPIENT MÉTALLURGIQUE

(30) Priorität: 23.11.2010 DE 102010052423; 21.05.2010 DE 102010021263
(43) Veröffentlichungstag der Anmeldung: 27.03.2013
(73) Patentinhaber: SMS Siemag AG, 40237 Düsseldorf (DE)
(72) Erfinder: SEIDEL, Jürgen, 57223 Kreuztal (DE); FALKENRECK, Udo, 44797 Bochum (DE); SUDAU, Peter, 57271 Hilchenbach (DE)
(74) Vertreter: Klüppel, Walter
(86) Internationale Anmeldenummer: PCT/EP2011/058167
(87) Internationale Veröffentlichungsnummer: WO 2011/144702

(56) Entgegenhaltungen:
- WO-A1-91/15433
- DE-A1- 2 657 238
- DE-A1- 3 603 783
- JP-A- 7 260 115

## Beschreibung

Die Erfindung betrifft die Kühlung für ein metallurgisches Gefäß, insbesondere einen Elektrolichtbogenofen, dessen Bauteile durch ein diese durchströmendes flüssiges Kühlmittel kühlbar sind, wobei das Kühlmedium nach dem Austritt aus den Bauteilen einer Wärmerückgewinnungs- oder Energieumwandlungsanlage zuführbar ist.

In den vergangenen Jahrzehnten wurde durch die Ausstattung von Schmelzöfen mit immer leistungsfähigeren Transformatoren und die Weiterentwicklung der Prozesstechnologie im Lichtbogenofen (LBO) das Einschmelzen von Stahl im Zyklus der anderen Stahlwerksprozesse (Sekundärmetallurgie, Stranggießanlagen) möglich. Neben der Anwendung von Schaumschlacke zur Abdeckung des Lichtbogens insbesondere in der Feinungsperiode, konnte die beim Lichtbogenofen vorhandene gesamte elektrische und chemische Leistung durch die Ausstattung des LBO mit wassergekühlten Wandpanelen ganz oder zumindest zum großen Teil eingesetzt werden.

Darüber hinaus ist üblicherweise auch die Abgasstrecke mit einer Wasserkühlung ausgestattet, um den Temperaturen von teilweise > 1500°C zu widerstehen.

Die zur Kühlung notwendigen Wassermengen wurden in den überwiegenden Fällen im Regelfall so großzügig ausgelegt, dass ein Überschuss an Kühlpotential vorhanden ist und die Notabschaltung wegen Erreichung eines vorgewählten Grenzwertes nur selten anspricht. Das bedeutete gleichzeitig, dass sich aufgrund der großen Wassermenge auch nur eine sehr moderate Temperaturdifferenz im Panel zwischen Einlauf und Auslauf von bis zu 25°C einstellt. Wegen der geringen Temperaturüberhöhung zwischen Einlauf und Auslauf wird die Wiedergewinnung dieser Prozesswärme andererseits erschwert.

Eine Rückgewinnung oder Verwendung von Wärme- bzw. Abgasenergie und Umwandlung der thermischen Energie in elektrische Energie mit z. B. dem ORC-Verfahren ist von anderen Anwendungsgebieten z. B. Verfeuerung von Biomasse bekannt.

Aus der DE 1 103 366 A1 ist weiter die Erzeugung von Hochduckdampf aus freiwerdender Wärme bekannt.

Die Höhe der Energieabfuhr aus den Quellen wie Schlacke, Metallbad oder Lichtbogen über die wassergekühlten Bauteile des LBO wird durch die angewandte Prozesstechnik und über die Verweilzeit einer Schmelze im Schmelzaggregat bestimmt. Da in den verschiedenen Phasen des Schmelzprozesses im LBO die Wärmebelastung der gekühlten Bauteile variiert, ändert sich analog auch der Temperaturgradient der üblicherweise ungeregelten Kühlwassermenge.

Bei einem reinen Schrotteinsatz für den LBO liegen die Energieverluste über die Schmelzperiode gerechnet in der Größenordnung von mindestens 15%. Das entspricht einer spezifischen Verlustleistung von ≥ 90 kWh/t Rohstahl, die über entsprechende Kühler in die Umwelt abgegeben werden.

Bei der Substitution von Schrott durch direkt reduziertes Eisenerz (DRI oder HBI) liegt der spezifische Gesamtenergiebedarf eines LBO um ca. 300 kWh/t Rohstahl höher. Damit steigen auch die Verluste über das Kühlmedium entsprechend an.

Da in naher Zukunft die Energiepreise steigen werden und zusätzliche Einschränkungen durch Maßnahmen gegen die globale Erderwärmung getroffen werden müssen, sollen Lösungen aufgezeigt werden, einen Teil der Wärmeverluste wieder nutzbringend zurückzuführen und in elektrische Energie umzuwandeln, die Prozesswärme bei anderen Wärmeverbrauchern zu nutzen und auf diese Weise Gesamtemissionen zu mindern bzw. durch Energiegutschriften die Umwandlungskosten zu reduzieren.

Aus der Vergangenheit sind Prozesse bekannt, mit deren Hilfe Energie auch auf einem niedrigen Temperaturniveau wieder umgewandelt werden kann (Mucciardi, Razavinia: The Capture and Conversation of low Grade Waste Heat in pyrometallurgical Operations, 47th Annual Conference of Metaliurgists of CIM, Winipeg, Manitoba/Canada).

Diese Rankine-, Sterling- oder Heat Pipe - Lösungen haben im Regelfall den Nachteil, dass sie bei niedrigem ΔT mit einem schlechten Wirkungsgrad arbeiten. Dabei wird die Effizienz der Energierückgewinnung von der Höhe der erreichbaren Endtemperatur der Kühlflüssigkeit mitbestimmt.

Diese liegt je nach Ausführung der LBO Kühlung bei Wasser als Kühlmittel im Regelfall <100°C. Es besteht weiterhin bei hohen Wassertemperaturen als Funktion des Wasserdruckes die Gefahr der Wasserdampfbildung und damit verbundener unratierlicher Wärmeabfuhr in den Kühlelementen sowie Druckanstieg im Wärmetauscher.

Der Erfindung liegt daher die Aufgabe zugrunde, eine Rückgewinnung von Verlustenergie bei metallurgischen Gefäßen insbesondere solchen, die für die Stahlherstellung eingesetzt werden, zu erreichen bzw. die bisherigen Maßnahmen, die hierzu dienten, zu verbessern.

Gelöst wird diese Aufgabe erfindungsgemäß mit einer Kühlung für ein metallurgisches Gefäss, insbesondere einen Elektrolichtbogenofen, dessen Bauteile ganz oder teilweise durch ein diese durchströmendes flüssiges Kühlmittel kühlbar sind, wobei das Kühlmittel nach dem Austritt aus den Bauteilen einer Wärmerückgewinnungs - oder Energieumwandlungsarilage zuführbar ist, dadurch gekennzeichnet, dass die Bauteile des metallurgischen Gefässes und die Wärmerückgewinnungs - oder Energieumwandlungsanlage, der das Kühlmittel nach dem Austritt aus den Bautelien des metallurgischen Gefässes zugeführt wird, von dem Kühlmittel in einem geschlossenen Kreislauf durchströmt werden und dass als Kühlmittel ein Mittel eingesetzt wird, das einen über dem Siedepunkt von Wasser liegenden Siedepunkt aufweist, wobei die Strömung des Kühlmittels im Kreislauf durch einen Regelkreis überwachbar sowie während des Behandlungsprozesses im metallurgischen Gefässes auf ein optimales Temperaturniveau, vorzugsweise zwischen 200 bis 400°C, einstellbar ist und als Energieumwandlungsanlage eine Stromerzeugungsanlage vorgesehen ist, wie eine ORC- oder Kalina-Anlage.

Der Kerngedanke der Erfindung besteht darin, die spezifische Art und Menge des eingesetzten Kühlmittels so zu steuern, dass auf der einen Seite die gekühlten Bauteile nicht beschädigt werden und auf der anderen Seite durch sein hohes ΔT eine hohe Quote bei der Wärmerückgewinnung aus der im Kühlmittel gespeicherten Energie möglich wird.

Erfindungsgemäß wird somit vorgeschlagen, an Stelle einer Wasserkühlung ein anderes Kühlmittel bzw. Wärmetauschermittel, vorzugsweise Thermoöl, zu nutzen, das eine höhere Siedetemperatur besitzt und bei niedrigem Anlagendruck höhere Wärmetransporttemperaturen zu einer nachgeschalteten Anlage, wie einer Stromerzeugungsanlage, ermöglicht.

Ein niedrigerer Anlagendruck wirkt sich direkt auf die Ausgestaltung der Anlage aus, d. h., wenn mit einem niedrigeren Anlagendruck gearbeitet werden kann, wird die Anlage insgesamt einfacher und damit natürlich kostengünstiger.

Durch die Anwendung von Kühlflüssigkeiten mit höheren Siedetemperaturen erhöht sich das abgebbare oder umwandelbare Energiepotential, so dass damit der Wirkungsgrad, beispielsweise bei der Erzeugung von elektrischer Energie steigt.

Als Stromerzeugungsanlage bietet sich z. B. eine ORC- oder Kalina-Anlage an.

Eine weitere Verbesserung wird dadurch erreicht, dass eine genauere Überwachung der Temperaturen in den einzelnen Regelkreisen erfolgt, damit das Kühlmittel während des Schmelzprozesses auf optimalem Temperaturniveau (z. B. 200 bis 400°C) eingestellt werden kann.

Die genauere Überwachung und Einstellung der Temperatur des Kühlmittels oder Wärmetauschermittels kann durch zuschaltbare Pumpen erreicht werden, die entweder die Fließgeschwindigkeit und/oder die Kühlmittelmenge entsprechend dem Energieanfall in den Wandelementen verändern, um auf diese Weise bei nicht gleich bleibenden Wärmestrom die Temperatur des Kühlmittels auf möglichst hohem Niveau halten zu können. Diese Maßnahmen erhöhen dann den Wirkungsgrad der Rückgewinnungsprozesse erheblich.

Die zurück gewonnene Energie kann im Rahmen eines Prozesswärmemanagementsystems weiterverwendet werden.

Die Weiterverwendung kann regional durchaus unterschiedlich sein. Dazu eignen sich z. B. Anlagen für die Entsalzung von Meerwasser, Trocknungsanlagen, Zwischenspeicherung in Wärmetanks zur Überbrückung kurzzeitiger Wärmeunterbrechungen und Speicherung von überschüssiger Wärmeenergie, Fernheizsysteme oder auch Verstromung mit Einspeisung ins Energienetz.

Soll die elektrische Versorgungssicherheit gewährleistet werden, so ist vorgesehen, einen z.B. Thermoölerhitzer zu installieren, der mit der ORC-Anlage verbunden ist und der als Standby-Zusatzheizung dient. Hierin kann z.B. überschüssiges Gas (Hochofengas) verheizt werden.

## Patentansprüche

1. Kühlsystem für ein metallurgisches Gefäß, insbesondere einen Elektrolichtbogenofen, dessen Bauteile ganz oder teilweise durch ein diese durchströmendes flüssiges Kühlmittel kühlbar sind, wobei das Kühlmittel nach dem Austritt aus den Bauteilen einer Wärmerückgewinnungs - oder Energieumwandlungsanlage zuführbar ist,
wobei die Bauteile des metallurgischen Gefäßes und die Wärmerückgewinnungs - oder Energieumwandlungsanlage einen geschlossenen Kühlmittel-Kreislauf aufweisen, dessen Kühlmittel einen über dem Siedepunkt von Wasser liegenden Siedepunkt aufweist,
dass die Strömung des Kühlmittels im Kreislauf durch einen Regelkreis überwachbar, und während des Behandlungsprozesses im metallurgischen Gefäß auf ein Temperaturniveau zwischen 200 bis 400°C einstellbar ist und
wobei als Energieumwandlungsanlage eine ORC- oder Kalina Anlage vorgesehen ist.

2. Kühlsystem für ein metallurgisches Gefäß nach Anspruch 1,
**dadurch gekennzeichnet,**
**dass** das Kühlmittel ein Thermoöl ist.

3. Kühlsystem für ein metallurgisches Gefäß nach einem der vorstehenden Ansprüche,
**dadurch gekennzeichnet,**
**dass** durch zuschaltbare Pumpen entweder die Fließgeschwindigkeit und/oder die Kühlmittelmenge im Kreislauf entsprechend dem Energieanfall steuerbar ist.

4. Kühlsystem für ein metallurgisches Gefäß nach einem der vorstehenden Ansprüche,
**dadurch gekennzeichnet,**
**dass** in den geschlossenen Kreislauf ein Kühlmittelerhitzer eingebunden ist, der als Standby-Zusatzheizung dient.

5. Kühlsystem für ein metallurgisches Gefäß nach einem der vorstehenden Ansprüche,
**dadurch gekennzeichnet,**
**dass** die zurück gewonnene Energie im Rahmen eines Prozesswärmemanagementsystems weiterverwendbar ist.

6. Kühlsystem für ein metallurgisches Gefäß nach Anspruch 5,
**dadurch gekennzeichnet,**
**dass** die Prozeßwärme in einer Anlagen für die Entsalzung von Meerwasser, einer Trocknungsanlage, zur Zwischenspeicherung in Wärmetanks zur Überbrückung kurzzeitiger Wärmeunterbrechungen und Speicherung von überschüssiger Wärmeenergie, in Fernheizsysteme oder zur Verstromung mit Einspeisung ins Energienetz einsetzbar ist.

## Claims

1. Cooling system for a metallurgical vessel, particularly an electric arc furnace, the components of which can be cooled entirely or partly by a liquid coolant flowing through these, wherein the coolant after exit from the components can be fed to a heat recovery or energy conversion plant, wherein the components of the metallurgical vessel and the heat recovery or energy conversion plant have a closed coolant circuit, the coolant of which has a boiling point lying above the boiling point of water, wherein the flow of the coolant in the circuit can be monitored by a regulating circuit and during the treatment process in a metallurgical vessel is set to a temperature level between 200 to 400° C and wherein an ORC or a Kalina plant is provided as energy conversion plant.

2. Cooling system for a metallurgical vessel according to claim 1, **characterised in that** the coolant is a thermo-oil.

3. Cooling system for a metallurgical vessel according to one of the preceding claims, **characterised in that** the flow speed and/or the coolant quantity in the circuit is controllable by switchable pumps in correspondence with the amount of energy.

4. Cooling system for a metallurgical vessel according to any one of the preceding claims, **characterised in that** a coolant heater serving as a standby auxiliary heating means is incorporated in the closed circuit.

5. Cooling system for a metallurgical vessel according to any one of the preceding claims, **characterised in that** the recovered energy is reusable within the scope of a process-heat management system.

6. Cooling system for a metallurgical vessel according to claim 5, **characterised in that** the process heat is usable in a plant for desalination of seawater, a drying plant, for intermediate storage in heat tanks for bridging over transient heat interruptions and storage of excess heat energy, in remote heating systems or for conversion with supply to energy mains.

## Revendications

1. Système de refroidissement pour une cuve métallurgique, en particulier un four à arc électrique dont les éléments peuvent être refroidis en tout ou en partie via un réfrigérant liquide qui les traverse, le réfrigérant, une fois qu'il a quitté les éléments, pouvant être acheminé à une installation de récupération de chaleur ou de conversion d'énergie, dans lequel les éléments de la cuve métallurgique et l'installation de récupération de chaleur ou de conversion d'énergie présentent un circuit de réfrigérant fermé dont le réfrigérant présente un point d'ébullition supérieur au point d'ébullition de l'eau, l'écoulement du réfrigérant dans le circuit peut être surveillé par un circuit logique et, au cours du processus de traitement dans la cuve métallurgique, peut être réglé à un niveau de température entre 200 et 400 °C, et dans lequel on prévoit, à titre d'installation de conversion de l'énergie, une installation ORC ou une installation kalina.

2. Système de refroidissement pour une cuve métallurgique selon la revendication 1, **caractérisé en ce que** le réfrigérant est une huile thermique.

3. Système de refroidissement pour une cuve métallurgique selon l'une quelconque des revendications précédentes, **caractérisé en ce que**, via des pompes qui peuvent être raccordées, on peut régler la vitesse d'écoulement et/ou la quantité de réfrigérant dans le circuit de manière correspondante à l'accumulation d'énergie.

4. Système de refroidissement pour une cuve métallurgique selon l'une quelconque des revendications précédentes, **caractérisé en ce qu'**un dispositif de chauffage du réfrigérant est incorporé dans le circuit fermé, qui fait office de chauffage supplémentaire en attente.

5. Système de refroidissement pour une cuve métallurgique selon l'une quelconque des revendications précédentes, **caractérisé en ce que** l'énergie récupérée peut être réutilisée dans le cadre d'un système de gestion de la chaleur industrielle.

6. Système de refroidissement pour une cuve métallurgique selon la revendication 5, **caractérisé en ce que** la chaleur industrielle peut être injectée dans une installation pour le dessalement de l'eau de mer, dans une installation de séchage, pour le stockage temporaire dans des réservoirs de chaleur pour le court-circuitage d'interruptions de chaleur de courte durée et pour l'accumulation d'énergie thermique en excès, dans des systèmes de chaleur à distance ou pour l'électrification avec alimentation dans le réseau énergétique.
